Europäisches Patentamt

European Patent Office

Office européen des brevets

(11) Publication number: **0 133 580**
A1

# EUROPEAN PATENT APPLICATION

(21) Application number: **84109503.7**

(22) Date of filing: **09.08.84**

(51) Int. Cl.⁴: **H 02 P 7/62**
**G 05 D 13/62**

(30) Priority: **11.08.83 JP 146856/83**

(43) Date of publication of application:
**27.02.85 Bulletin 85/9**

(84) Designated Contracting States:
**DE GB IT SE**

(71) Applicant: **Kabushiki Kaisha Ono Sokki**
**2-4-1 Nishi-Shinjuku**
**Shinjuku-ku Tokyo(JP)**

(72) Inventor: **Maehara, Osamu**
**19-12, Honjuku-cho Asahi-ku**
**Yokohama-shi Kanagawa-ken(JP)**

(72) Inventor: **Nakajima, Yoshitaka**
**1-905, Kosugigoten-cho Nakahara-ku**
**Kawasaki-shi Kanagawa-ken(JP)**

(74) Representative: **Kador . Klunker . Schmitt-Nilson . Hirsch**
**Corneliusstrasse 15**
**D-8000 München 5(DE)**

(54) Permanent magnet synchronous motor control system.

(57) A resolver is mounted on the rotating shaft of a motor under control. Two carriers having a 90 degree phase difference are supplied to the resolver causing the resolver to produce a phase signal having a phase proportional to the angle of rotation of the controlled motor. At a phase detector, the two-phase carriers are subjected to detection by the above stated phase signals to form phase detection signals and wave-form converters continuously convert these phase detection signals into voltage signals. At the same time, a deviation signal generating part, forms a deviation signal representative of a difference between the phase signal of the resolver and a control command phase signal. Multipliers multiply the two-phase continuous voltage signals by the deviation signal and produce multiplication signals. The multiplication signals are applied via a two-phase to three-phase converting circuit to a motor driving circuit thereby controlling the speed and position of the motor.

FIG.2

K21781S/8ba                              August 9,1984


## PERMANENT MAGNET SYNCHRONOUS MOTOR CONTROL SYSTEM

Background of the Invention:

Field of the Invention:

This invention relates to a system for controlling the rotation angle of a permanent magnet-type synchronous motor, and more particularly to a control system which uses a resolver for detecting a feedback signal, thus improving responsiveness.


Description of the Prior Art:

Generally, machine tools and robots have their angles of rotation under the control of DC motors and control systems provided for the motors. The reason for this lies in the simplicity of arrangement required for such a control system. Meanwhile, however, such a control system requires troublesome maintenance work due to the brush and commutator of the DC motor. To avoid the troublesome maintenance, therefore, the use of a DC motor has recently begun to be replaced with the use of a permanent magnet type synchronous motor which excludes a brush with a rotor, and is composed of a permanent magnet requiring substantially less maintenance work, although the arrangement of the control system becomes somewhat more complex than a control system for a DC motor.

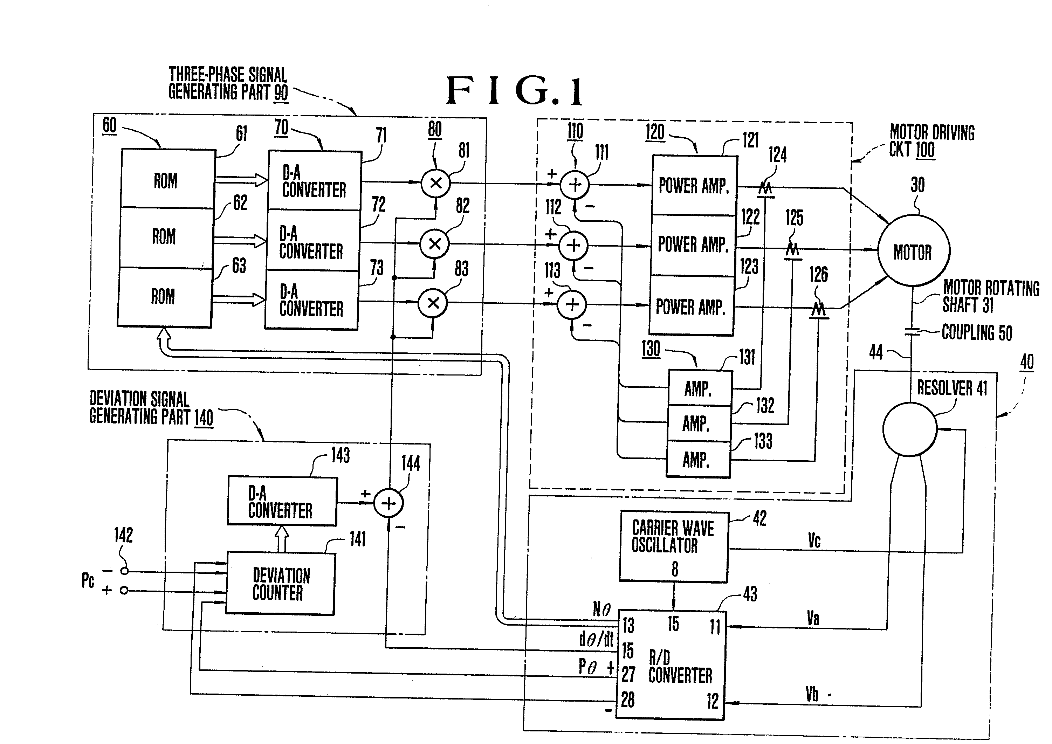

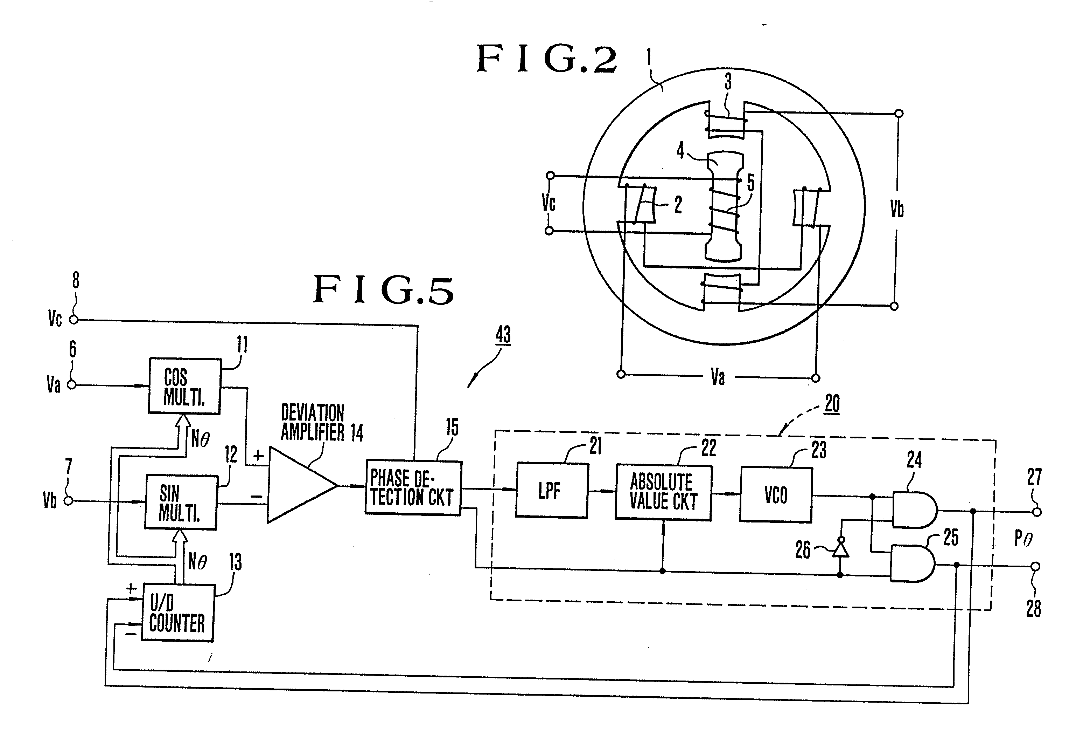

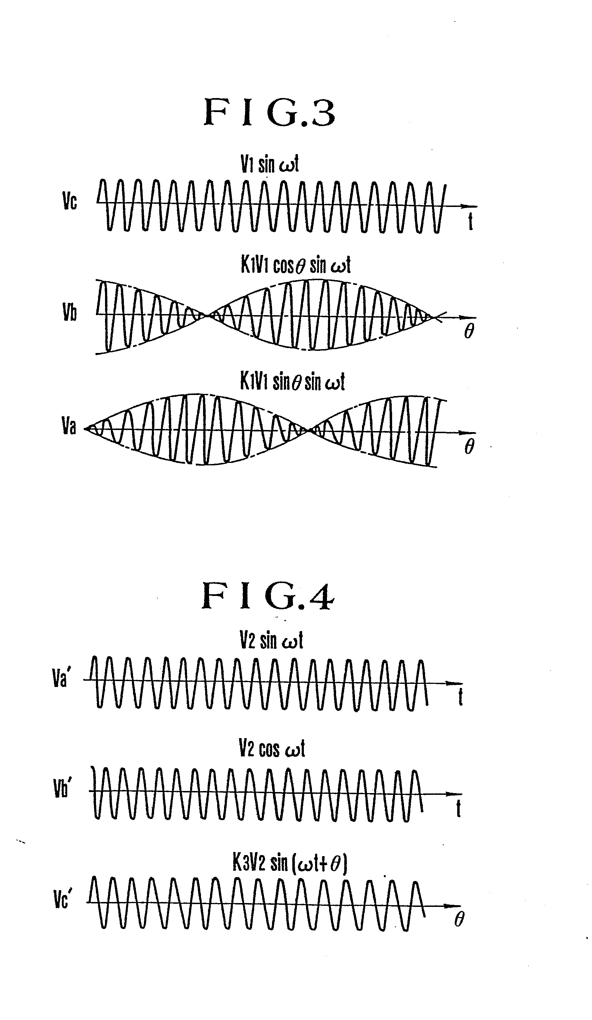

Fig. 1 of the accompanying drawings is a block diagram showing a control system of the prior art arranged for the above stated permanent magnet type synchronous motor (hereinafter will simply be called, "a motor"). Referring to the drawing, a motor 30 to be controlled is provided with a rotating shaft 31 which is coupled by a coupling 50 to the detection shaft 44 of a resolver 41 disposed within a feedback signal detection part 40. Fig. 2 shows the basic arrangement of the resolver 41. The resolver includes two coils, 2 and 3 which are arranged in opposite directions and perpendicular to a stator 1. On the inside of the stator is rotatably disposed a rotor 4 which has a coil 5 wound around it. Signal exchange with the rotating coil 5 is arranged to be carried out in a non-contacting manner, for example, via a rotary transformer. To the coil 5 of the resolver 41 is supplied a carrier Vc from a carrier wave oscillator 42. The carrier Vc is of a constant frequency as shown in Fig. 3 and can be expressed as follows:

$$Vc = V1 \sin \omega t \ . \ . \ . \ . \ . \ . \ . \ . \qquad (1)$$

wherein V1 : Amplitude of excitation voltage

$\omega$ : Excitation angular velocity

Accordingly, the coils 2 and 3 produce voltages Va and Vb which are of the same frequency as the carrier Vc and have an amplitude which varies with the rotation angle $\theta$ of the rotor 4. The voltages Va and Vb have a phase difference of 90 degrees and can be expressed as follows:

$$Va = K1V1 \sin\theta \sin \omega t$$
$$\ . \ . \ . \ . \ . \qquad (2)$$
$$Vb = K1V1 \cos\theta \sin \omega t$$

wherein K1: Coefficient of proportion

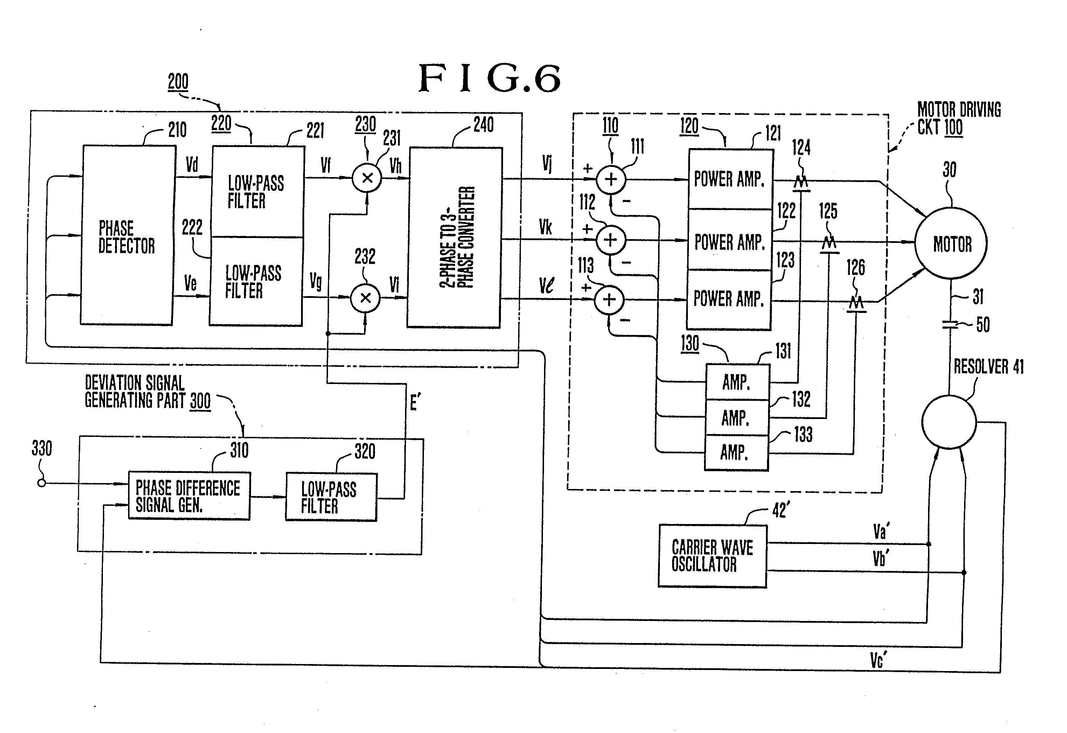

Again referring to Fig. 1, a reference numeral 43 denotes a resolver/digital converter which receives the voltages Va and Vb and is arranged to form a value $N\theta$ corresponding to the rotation angle $\theta$, an analog signal $d\theta/dt$ corresponding to the rotation speed and an incremental signal $p\theta$ relative to the rotation angle $\theta$. This converter 43 may be selected from commercially available products such as a product IRDC 1730 of Analog Devices, Inc. Briefly stated with reference to Fig. 5, the converter 43 is arranged as follows: In Fig. 5, numerals 6 and 7 denote input terminals of a cosine multiplier 11 and a sine multiplier 12. The above stated outputs Va and Vb of the resolver 41 are supplied to the input terminals 6 and 7. Meanwhile, the count output $N\theta$ of an U/D counter 13 is supplied to the other input terminals of these multipliers 11 and 12. The cosine multiplier 11 computes the values Va and cos $N\theta$ while the sine multiplier 12 computes the values Vb and sin $N\theta$. The results of the computation thus obtained are supplied to a deviation amplifier 14. The amplifier 14 forms a deviation output which is of an amplitude corresponding to a difference between the two input signals and of the same frequency as that of carriers Va and Vb. The deviation output is supplied to a phase detection circuit 15. The circuit 15 detects a phase range of 0 to 180 degrees of the detection output in accordance with a detection command in the range of 0 to 180 degrees introduced from the terminal 8 of the above stated carrier wave oscillator 42. The result of detection is supplied to a phase locked loop 20 which consists of circuits 21 - 26. The signal which has been thus detected is smoothed by a low-pass filter 21. The smoothed signal is supplied to an absolute value circuit 22. Meanwhile, a polarity signal which is indicative of the polarity of the detected signal produced from the above stated phase detection circuit 15 has been impressed on the absolute value circuit 22. When the polarity is negative, the input is inverted. In the event of positive polarity, the input is not inverted. The signal thus processed by the absolute value circuit is supplied to a voltage control oscillator 23. The circuit 23 then produces a pulse train of a frequency corresponding to the input signal. The pulse train is supplied to one of the input terminals of each of the first and second gate circuits 24 and 25. The other input terminals of the first and second gate circuits 24 and 25 respectively receive the above stated polarity signal inverted by an inverter 26 and the polarity signal not inverted. The first and second AND gates 24 and 25 then selectively open or close according to the polarity of the detected signal and selectively produce from their output terminals 27 and 28 the numbers of pulses $P\theta$ corresponding to the magnitude of the detected signal. Then, these pulse trains $P\theta$ are supplied to an addition count input terminal and a subtraction count input terminal of the above stated U/D counter 13 according to their polarities.

The converter 43 which is arranged as described above operates as follows: Assuming that the converter 43 is balanced with the output of the deviation amplifier 14 being zero under a condition where the rotor of the resolver 41 has turned to a certain angle $\theta$, the voltages Va and Vb are as represented by formula (2). Accordingly, the count value $N\theta$ of the U/D counter 13 corresponds to the angle $\theta$, because: In a balanced condition, a relation of Va·cos Nθ = Vb·sin Nθ is obtained. Therefore, as apparent from formula (2), Va/Vb becomes sinθ/cosθ.

Next, when the rotor 4 is turned from this state to a degree as much as Δθ, the amplitudes of voltages Va and Vb respectively change to K1V1 sin(θ + Δθ). As a result, the outputs of the cosine and sine multipliers 11 and 12 no longer coincide with each other. A difference between these two outputs is detected. The phase locked loop 20 then produces a number of pulses corresponding to a detection signal thus obtained. In this instance, the first and second AND gate circuits 24 and 25 are selectively operated according to the polarity of the detection signal allowing the pulses Pθ to pass by there. This causes the count value Nθ of the U/D counter 13 which receives the pulses Pθ to change accordingly. The change of the count value makes the difference between the outputs of the cosine and sine multipliers 11 and 12 smaller. After that, the above stated processes of operation are repeated to cause the count value of the U/D counter 13 to become (Nθ + ΔNθ) which corresponds to the angle (θ + Δθ). The converter 43 then becomes balanced in that state.

Therefore, the count value Nθ of the U/D counter 13 of the converter 43 is proportional to the angle θ and the number of oscillation pulses Pθ of the phase locked loop 20 proportional to an increment Δθ of the angle θ. Further, the detection signal of the detection circuit 15 corresponds to the degree of change of the angle θ, i.e. the angular velocity dθ/dt. The R/D converter 43 operates in this matter.

Referring further to Fig. 1, a block 140 represents a deviation signal generating part. In this part 140, the UP terminal and the DOWN terminal of a deviation counter 141 are arranged to receive, from the above stated feedback signal detecting part 40, the feedback increment pulses P$\theta$ and, from an external terminal 142, control command increment pulses Pc respectively. These inputs P$\theta$ and Pc are connected so as to make their polarities opposite to each other. The connection arrangement is such that a difference between the control command pulses Pc and the feedback increment pulses P$\theta$ is counted by the deviation counter 141. The count value thus obtained is converted into an analog signal by a D-A converter 143. The analog signal thus obtained is applied to one of the input terminals of a subtractor 144. The subtractor 144 performs a subtracting operation on the analog signal and the above stated angular velocity signal d$\theta$/dt of the feedback signal detecting part 40, introduced via the other input terminal of the subtractor. As a result of this subtraction, an angular velocity deviation signal is produced from the subtractor 144.

A block 90 represents a three-phase signal generating part which consists of a group of three read-only memories 60, a group of D-A converters 70 and a group of multipliers 80. In the group of read-only memories 61, 62 and 63, sine function values which differ in phase by 120 degrees have been written in beforehand in correlation to angle addresses. The angle signal N$\theta$ from the converter 43 (see Fig. 5) of the feedback signal generating part 40 is supplied as a designation signal for a read-out address. Therefore, data sin$\theta$, sin ($\theta$ + 120°)

and sin ($\theta$ + 240°) can be read out from these read-only members 61, 62 and 63 according to the rotation angle $\theta$ of the motor 30. The data thus read out are converted into analog signals by the D-A converters 71, 72 and 73 which are connected to these memories. The analog signals thus obtained are supplied to the input terminals of the multipliers 81, 82 and 83. Meanwhile, other input terminals of these multipliers 81, 82 and 83 receive the angular velocity deviation signal from the deviation signal generating part 140. Each of these multipliers then performs a multiplying operation on the angular velocity deviation signal and the three-phase analog signals differing 120 degrees in phase. As a result, the three-phase signal generating part 90 produces motor control signals of three different phases (hereinafter will be called, "three-phase motor control signals) which vary in a sinusoidal wave-like manner according to the rotation angle of the motor 30 and have their amplitude vary with angular velocity deviation.

Another block 100 represents a driving circuit for the motor 30. The circuit 100 consists of subtracters 111 - 113, each of which is arranged to receive the three-phase control signal from the above stated three-phase signal generating circuit 90 at one of the input terminals thereof; power amplifiers 121 - 123 which are arranged to receive the outputs of the subtracters 111, 112 and 113 and to supply driving currents to three armature windings (not shown) of the motor 30 to which they are connected; current sensors 124, 125 and 126 which are arranged to detect these driving currents and to supply them to other input terminals of the above stated subtracters 111, 112 and 113; and amplifiers 131, 132 and 133 which are arranged in combination with these current sensors 124, 125 and 126. Such being the arrangement, the currents supplied to the armature windings of the motor 30 vary with the three-phase control signals. Three magnetic fields which are generated by these currents then apply a torque corresponding to the composite vector of these three magnetic fields to the rotor of the motor 30. This causes the motor to rotate.

The above brief description of the prior art can be summarized as follows:

(i)  Taking out the feedback information:

The rotation angle $\theta$ of the motor 30 is taken out by means of the resolver 41 as amplitude information. Then, the resolver - digital converter 43 converts the amplitude information into the angle signal $N\theta$, the angular velocity signal $d\theta/dt$ and the angle increment signal $P\theta$.

(ii) Control command signal:

Uses the angle increment signal $Pc$.

(iii) Generation of the deviation signal:

A difference between the control command increment signal $Pc$ and the feedback increment signal $P\theta$ is obtained. Then, a difference between the difference thus obtained and the feedback angular velocity signal $d\theta/dt$ is obtained as the deviation signal.

(iv) Generation of the three-phase signal:

The feedback angle signal $N\theta$ is supplied to the read-only memory as an address designation signal and a preset sine function is read out therefrom. Then, the control signal is obtained by multiplying the read-out sine function by the deviation signal.

In the control system described, a digital circuit is arranged in combination with an analog circuit. In cases where the frequency of the control command signal Pc is high, however, the time lag of the resolver - digital converter 43 and the D-A converters 70 become no longer ignorable and this results in over-shooting or under-shooting.

Further, the D-A converter 143 is used for generating the deviation signal. The control accuracy of the system, therefore, hinges on the stability of the D-A converter 143. This necessitates use of an expensive D-A converter.

In addition to these shortcomings, the whole structural arrangement of the prior art control system is complex. The great number of elements used increase the probability of problems and also inevitably increase the cost.

Summary of the Invention:

It is a principal object of this invention to provide a control system which has a high degree of responsiveness and is capable of solving the above stated problems of the prior art.

It is another object of the invention to provide a control system of simplified structural arrangement which reduces the probability of problems and permits reduction in cost.

In the control system according to the invention, the rotation angle of the rotating shaft of a motor to be controlled is detected by means of a resolver in the same manner as in the prior art system. However, in accordance with this invention, the resolver is used in a different manner from the prior art. Carriers of a 90 degree phase difference are supplied to the two coils wound around a stator. A signal induced in the coil is wound around a rotor, i.e. a phase signal which is of the same frequency as that of the carriers and has its phase in correspondence with the rotation angle of the rotor, is taken out and is used as a feedback signal of the control system. Therefore, the resolver - digital converter which is included in the prior art control system and is affecting the responsiveness of the system, is omitted, so that the invented system permits simplification of structural arrangement as well as improvement in responsiveness. Next, the control command information is obtained in the form of a phase signal in the same manner as the feedback information. A deviation signal generating part which includes an analog element is arranged to produce a deviation signal corresponding to a phase difference between the two phase signals. This arrangement of the deviation signal generating part, therefore, also obviates the necessity of a D-A converter which also affects the responsiveness, so that the structural arrangement in this connection can be further simplified.

Next, in a three-phase signal generating part, the above stated feedback phase signal which is taken out from the resolver and the 90 degree phase carriers which are supplied to the resolver are supplied to a phase detector. Each of the carriers is then detected by means of the phase signal. In other words, gates are switched by means of the feedback phase signal to allow each carrier to pass therethrough only while its polarity is positive. A two-phase phase comparison signal which is thus allowed to pass through, is smoothed by a wave-form converter. This arrangement causes the position, i.e. the phase

0133580

of the carrier which phases through the gate to vary relative to the change in phase of the feedback phase signal. The signal which is obtained by smoothing the passed carrier changes with the sine function of the phase of the feedback signal, i.e. the rotation angle of the rotating shaft of the motor. Two carriers are provided. The phase of one carrier deviates 90 degrees from that of the other (hereinafter these carriers will be called two-phase carriers). Each signal which is obtained by smoothing one of the carriers through the wave-form converter as stated above also differs in a phase of 90 degrees from another signal obtained from the other carrier.

At multipliers, the two-phase signals of a 90 degree phase difference (hereinafter will be called two-phase signals) are multiplied by a deviation signal produced from the above stated deviation signal generating part. Singnals thus obtained are then converted into three-phase control signals through a two-phase to three-phase converter. Then, as in the case of the prior art, these control signals are supplied to a motor driving circuit thereby causing the motor to rotate. Therefore, unlike the prior art, the invention also obviates the necessity of the D-A converters. Besides, since the processes in the first half stage of the operation are arranged to be performed on the two-phase signals, the invention further permits simplification of structural arrangement.

As mentioned above, in accordance with the present invention, the motor control system is arranged completely in an analogical manner and the whole system arrangement is simplified in such a way as to permit improvement in respon-siveness.

11

The above and further objects and features of the invention will become apparent from the following detailed description of preferred embodiments thereof, taken in connection with the accompanying drawings.

Brief Description of the Drawings:

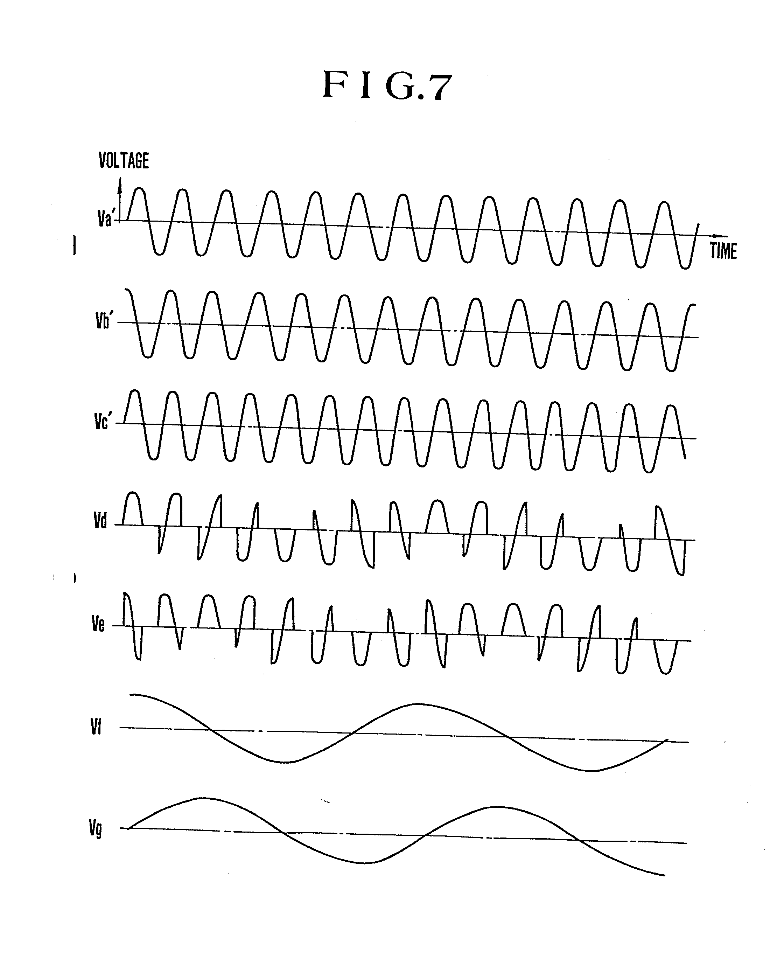

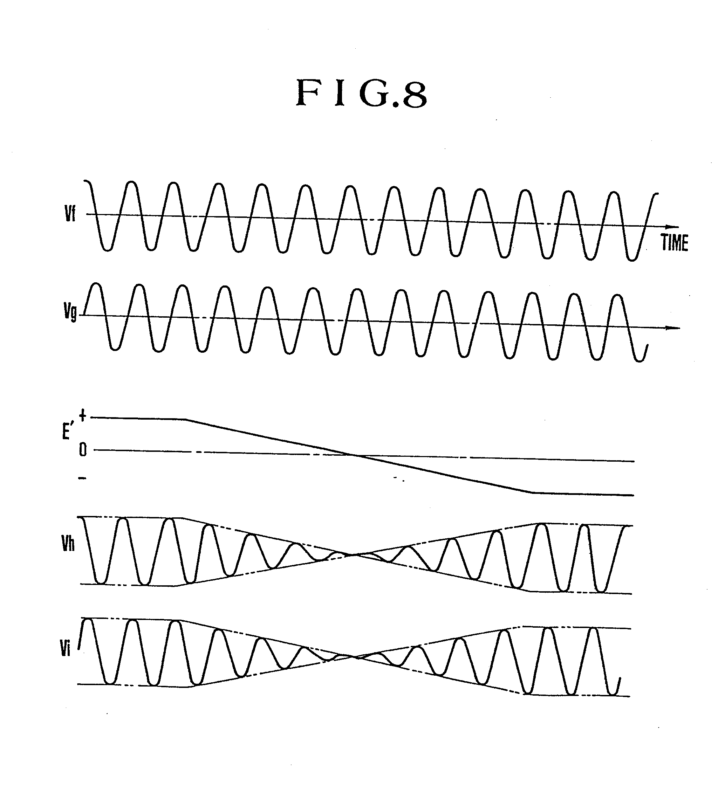

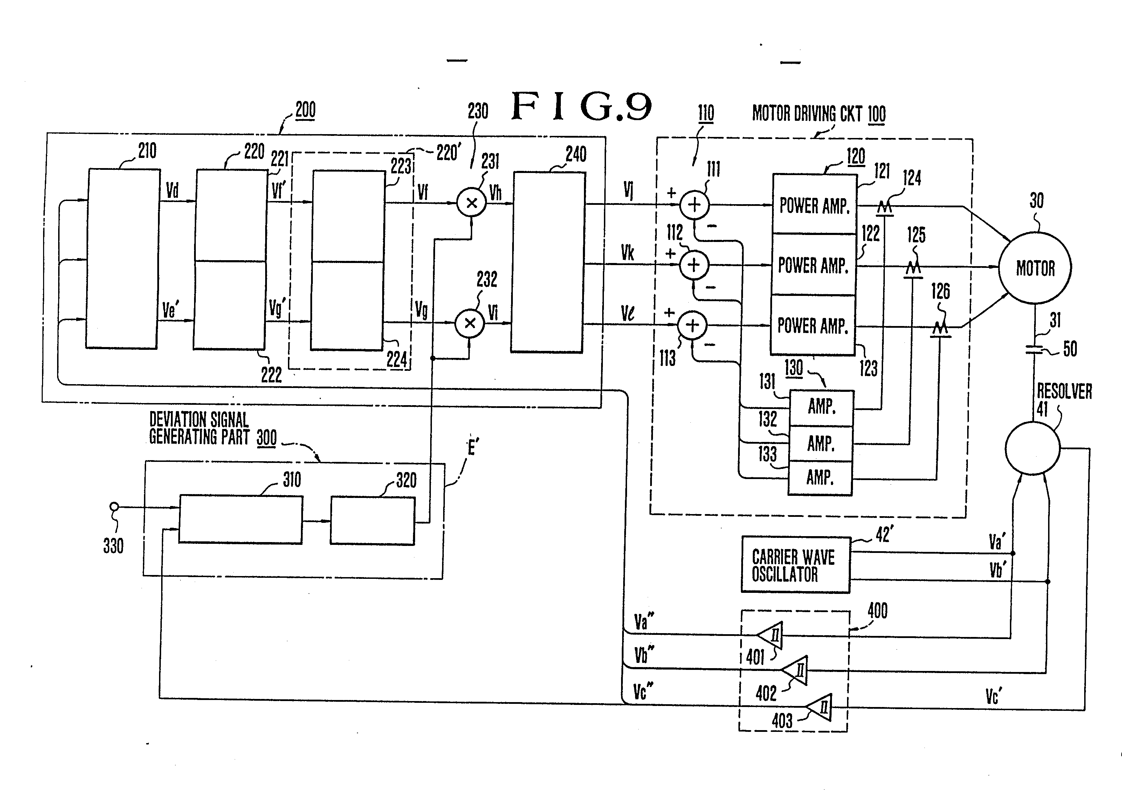

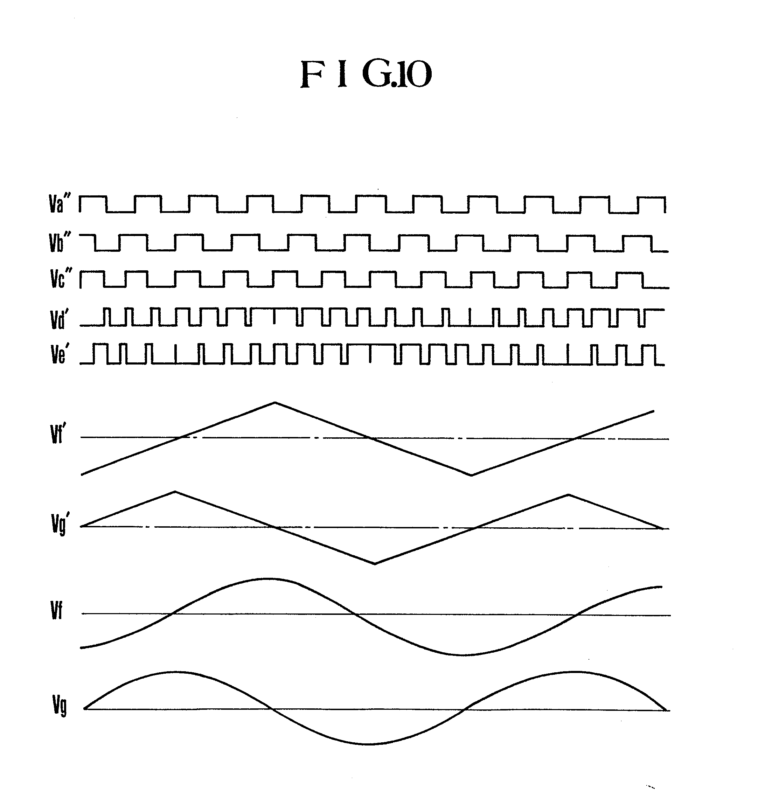

Fig. 1 is a block diagram showing a motor control system of the prior art. Fig. 2 is a schematic illustration of a model showing the basic arrangement of a resolver to be used for detection of a feedback signal both in the prior art and in the present invention. Fig. 3 is a wave-form chart showing the wave forms of carriers to be supplied to the resolver and that of the output thereof obtained according to the prior art. Fig. 4 is a wave-form chart showing the wave forms of carriers supplied to the resolver and that of the output thereof, obtained according to the invention. Fig. 5 is a block diagram showing a resolver - digital converter used in the prior art. Fig. 6 is a block diagram showing a motor control system arranged as an embodiment example of this invention. Fig. 7 is a wave-form chart showing a wave-form processing operation performed by a three-phase signal generating part of Fig. 6. Fig. 8 is a wave-form chart showing a multiplying operation performed on a deviation signal at the three-phase signal generating part of Fig. 6. Fig. 9 is a block diagram showing a motor control system arranged as another embodiment example of the invention. Fig. 10 is a wave-form chart showing a wave-form processing operation performed at a three-phase signal generating part of Fig. 9.

Description of Preferred Embodiments:

Fig. 6 shows a preferred example of embodiment of the invention. A motor 30, a driving circuit 100 for the motor and a resolver 41 coupled via a coupling 50 to the rotating shaft 31 of the motor 30 are denoted with the same reference numerals as in Fig. 1 and are arranged to operate in the same manner as the corresponding ones of Fig. 1. However, in the case of this embodiment, the carriers to be supplied to the resolver 41 and the output of the resolver differ from those of Fig. 1. More specifically, a carrier wave oscillator 42' is arranged to produce sinusoidal waves Va' and Vb' which differ 90 degrees in phase from each other as shown in Fig. 4. These sinusoidal waves can be expressed as follows:

$$Va' = V2 \sin \omega t$$
$$Vb' = V2 \cos \omega t$$

. . . . . . . (3)

wherein V2 : Amplitude of excitation voltage

These sinusoidal waves are supplied to the coils 2 and 3 (see Fig. 2) of the stator 1 of the resolver 41. Then, among magnetic fluxes radiated from the coils 2 and 3, the magnetic fluxes interlinking with the rotor 4 vary with the rotation angle θ of the rotor 4. Then, a voltage Vc' induced in the coil 5 becomes a phase signal having phase deviation corresponding to the rotation angle of the rotor. The phase signal voltage Vc' can be expressed as:

$$Vc' = K2V2 \cos \omega t \sin\theta + K2V2 \sin \omega t \cos\theta$$
$$= K3V3 \sin (\omega t + \theta) \quad . . . . . . (4)$$

Further, the method for obtaining from the resolver the phase signal having a phase deviation corresponding to the rotation angle of the rotor is known, for example, as disclosed in U.S.Patent No. 3,828,234. This method and the above stated prior art method for taking out an amplitude signal have already been generally practiced.

In accordance with this invention, the carriers Va' and Vb' which differ 90 degrees in phase and are produced from the carrier wave oscillator 42' and the output Vc' produced from the resolver 41 are used directly as feedback signals for obtaining a deviation signal and three-phase control signals.

Again referring to Fig. 6, a block 300 denotes a deviation signal generating part. In the deviation signal generating part 300, one of the input terminals of a phase difference signal generator 310 is arranged to receive the above stated feedback phase signal Vc' produced from the resolver 41. The other input terminal of the signal generator 310 is arranged to receive a control command phase signal from an external terminal 330. Then, the signal generator 310 produces a phase difference signal corresponding to a difference between these two signals. This phase difference signal is an intermittent signal formed at every period of the feedback phase signal. This phase difference signal is supplied to a low-pass filter 320, where it is then smoothed. The low-pass filter 320 thus converts the input signal into a deviation signal E' which continuously represents the deviation of the feedback phase signal. Next, a block 200 represents a three-phase signal generating part. The phase signal Vc' produced from the resolver 41 and the carriers Va' and Vb' which are produced with a 90 degree phase difference from the carrier wave oscillator 42' are supplied to the three-phase signal generating part 200. In the part 200, a phase detector 210 which is composed of, for example, an analog switch circuit, is arranged to form phase deviation signals Vd and Ve by allowing the carriers Va' and Vb' to pass therethrough only while the polarity of the phase signal Vc' is positive. Low-pass filters 221 and 222 are arranged to smooth the signals Vd and Ve which are obtained by thus passing the carriers Va' and Vb' through the phase detector 210. The outputs Vf and Vg of the low-pass filters 221 and 222 are supplied to the input terminals of multipliers 231 and 232. Other input terminals of these multipliers 231 and 232 receive the deviation signal E' produced from the above stated deviation signal generating part 300. The multipliers 231 and 232 respectively perform multiplying operations on the two input signals to obtain multiplication signals Vn and Vi. A two-phase to three-phase converter 240 is arranged to receive these signals Vn and Vi and to produce three-phase signals Vj, Vk and Vℓ, which are supplied to a motor driving circuit 100 as control signals.

Fig. 7 shows the operation of the phase detector 210 and that of the low-pass filters 221 and 222 with the motor 30 assumed to be under constant speed rotating control. Wave forms Va' - Vg represent the inputs and outputs of these elements. The wave forms Va' and Vb' represent the carriers which are of a constant frequency irrespective of the rotation angle θ of the motor 30 and differs in phase 90 degrees from each other. The wave form Vc' represents the feedback phase signal which changes in phase accordingly as the rotation

angle θ of the motor 30 changes. In the event of a constant speed rotation control, the phase of this signal Vc' linearly increases. These carriers Va' and Vb' and the phase signal Vc' are supplied to the phase detector 210. The carriers Va' and Vb' are allowed to pass only while the polarity of the phase signal Vc' is positive. As a result of this, the positions of the wave forms of these carriers Va' and Vb' allowed to pass there, change linearly. Then, the mean values of passed wave forms Vd and Ve at each period, i.e. the wave forms smoothed by the low-pass filters 221 and 222, become wave forms such as the ones represented by wave forms Vf and Vg which change in a sinusoidal wave-like manner with a 90 degree phase difference between them.

Referring to Fig. 8, the outputs Vf and Vg of the low-pass filters 221 and 222 are multiplied by the deviation signal E' respectively at the multipliers 231 and 232 to obtain wave forms Vh and Vi as shown in Fig. 8. The amplitudes of the two-phase signals Vf and Vg vary according to the magnitude of the absolute value of the deviation signal E'. When the polarity of the deviation signal E' reverses, the phases of the wave forms Vh and Vi obtained through multiplication by the signal E' also reverse accordingly as shown in Fig. 8. The two-phase signals produced from the multipliers 231 and 232 are converted into three-phase control signals by the two phase to three-phase converter. The three-phase control signals thus obtained are supplied to the motor driving circuit 100 and are applied to the armature windings of the motor 30. Then, rotating fields are generated thereby causing the motor 30 to rotate.

In the description given above, the details of each circuit are omitted. However, all of these circuits are known. For example, the phase difference signal generator 310 is arranged in a manner as disclosed in Fig.15-7 of a book entitled "Circuit Design for Electronic Instrumentation", published by McGraw-Hill Book Company. The two-phase to three-phase converter is of the type frequently used for motor control systems and generally comprises, for example, a first attenuator which multiplies one of the two-phase signals Vh and Vi or Vh, for example, by 1/2; a first inverter which inverts the polarity of the output of the attenuator; a second attenuator which multiplies the other signal Vi by $\sqrt{3}/2$; a second inverter which inverts the polarity of the output of the second attenuator; a first adder which adds the output of the first inverter and that of the second adder which adds the outputs of the first and second inverters, together. The converter is thus arranged to form three-phase signals Vh, $(\sqrt{3}/2)$ Vi - (1/2) Vh and - $(\sqrt{3}/2)$ Vi - (1/2) Vh. Further, the phase detection circuit 210, the low-pass filters 220 and the multipliers 230 are all arranged in a well-known manner.

The control system described operates as follows: When the phase of the control command phase signal supplied to the deviation signal generating part 300 changes, a phase difference arises between the command phase signal and the feedback phase signal Vc'. The deviation signal generating part 300 produces a deviation signal E' which corresponds to the phase difference and supplies it to each of the multipliers 231 and 232. Meanwhile, the phase detector 210 of the three-phase signal generating part 200 produces, in accordance with the sine function value of the existing rotation angle of the motor 30, two-phase signals Vd and Ve differing 90 degrees in phase from each other. These signals Vd and Vc are smoothed respectively via applicable low-pass filters 221 and 222 and are then supplied to the above stated multipliers 231 and 232. Accordingly, the multipliers 231 and 232 respectively, produce sine function outputs Vh and Vi of a 90 degree phase having their amplitudes correspond to the deviation signal E'. After conversion of the outputs Vh and Vi into three-phase signals, these signals are applied to the armature of the motor 30 to produce the rotating fields of intensity corresponding to the deviation signal E' for rotating the motor 30. The rotation of the motor results in a change in phase of the feedback phase signal from the resolver 41. Then, a phase difference between the feedback phase signal and the control command phase signal is detected in the same manner as described in the foregoing and the control operation is repeated.

In the embodiment described above, an electromagnetic resolver is employed as the resolver 41. However, in accordance with the invention, the electromagnetic resolver may be replaced with a photo-electric resolver which is arranged, for example, as disclosed in U.S.Patent No. 3,306,159. Further, in this embodiment, the deviation signal generating part 300 is arranged to use the phase difference signal generator 310. However, the generator 310 may be replaced with a multiplier for attaining the same effect. In other words, let us assume that the phase signal Vc' of the resolver 41 and the control command phase signal VR are expressed as follows:

$$Vc' = K3V2 \sin (\omega t + \theta)$$
$$VR = K3V2 \sin (\omega t + X)$$

wherein X : Phase of the control command signal

Then, with the multiplier employed in place of the generator 310, the result of multiplication can be expressed as follows:

$$Vc' \cdot VR = \frac{K3^2 V2^2}{2} \{\cos(\theta - X) + 2 \sin \omega t \cos \omega t \sin(\theta + X) + \cos 2\omega t\}$$

Having the result of the multiplication passed through the low-pass filter 320, what remains is the first term of the above formula. Then, with the phase X of the control command signal set at a value larger by 90 degrees than an angle $\alpha$ to be controlled, the following relationship is obtained:

$$K3^2 V2^2 \cos(\theta - X) = -K3^2 V2^2 \sin(\theta - \alpha)$$

The deviation signal E' becomes negative in the event of $\theta > \alpha$; becomes positive in the event of $\theta < \alpha$; and becomes zero in the event of $\theta = \alpha$.

Further, the deviation signal generating part 300 permits modifications other than the one stated above. In another example of such a modification, the control command phase signal is obtained in the form of a ramp function and by sample-and-holding it according to the phase signal Vc' by means of a sample-and-hold circuit. Any of these modifications are usable as long as the deviation signal is arranged to be generated by known analog means.

In the embodiment described, the carriers Va' and Vb' which are to be supplied to the resolver 41 and the phase output Vc' thereof, are arranged to have sine wave forms and to be processed with those wave forms left unchanged. However, in the event of a resolver arranged to receive a square wave form or to have its output rectified into a square wave form, the same control effect can be attained by just adding a triangular wave-to-sine wave converter to the system of Fig. 6. An example of such arrangement is as shown in Fig. 9 which shows another embodiment of the invention.

Referring to Fig. 9, the embodiment is a control system wherein the carriers Va' and Vb' produced from a carrier wave oscillator 42' and the phase output Vc' produced from the resolver 41 are converted into square wave forms Va", Vb" and Vc" as shown in Fig. 10, through shaping circuits 401, 402 and 403 of a wave-form converting part 400. The control operation is accomplished with these shaped signals used as feedback signals. The arrangement of the embodiment shown in Fig. 9 differs from that of the embodiment shown in Fig. 6 in the following point: Besides the above stated addition of the wave-form converting part 400, triangular wave-to-sine wave converters 223 and 224 are interposed between the low-pass filters 221 and 222 and the multipliers 231 and 232 within the three-phase signal generating part 200. With the exception of this, all other parts of the arrangement are identical with those of the preceding embodiment example. The operation of other parts is also similar to that of the preceding embodiment example. In the phase detector 210 of the control system of Fig. 9, the phase signal Vc" which has been shaped into a square wave and the carriers Va" and Vb" which have also been shaped into a square wave form are compared in phase with each other. As a result of this, outputs Vd' and Ve' which have their high level widths changed in a triangular wave-like shape relative to the linear increase of the phase signal Vc" are produced, as shown in Fig. 10. These outputs Vd' and Ve' are converted via the low-pass filters 221 and 222 into continuous triangular wave signals Vf' and Vg'. After that, these signals Vf' and Vg' are converted by the added triangular wave-to-sine wave converters 223 and 224 into the same sine wave forms as the above stated signals Vf and Vg of Fig. 6 (see Figs. 7 and 10). Accordingly, the ensuing processes of the control operation are carried out in the same manner as the system of Fig. 6.

According to this invention, as described in the foregoing, in a control system using a resolver for taking out a feedback signal representative of the angle of rotation of a motor under control, the necessity of a resolver-to-digital converter is obviated with the whole system solely consisting of analog circuit elements. The invented system has an improved responsiveness and can be arranged to have simplified structural arrangement for a reduction in cost.

What we claim :

1. A control system for a permanent magnet synchronous motor, comprising:

a resolver arranged to detect the angle of rotation of the controlled motor by converting the rotation angle into a phase signal;

phase detecting means arranged to form phase detection signals of two different phases by detecting, according to said phase signal, carriers of two different phases which are supplied to said resolver;

wave-form converting means for converting said phase detection signals of two phases into voltage signals of two different phases;

deviation signal generating means for forming a deviation signal representing a difference between the phase signal of said resolver and a control command phase signal which has been applied to the deviation signal generating means beforehand;

multiplying means for the formation of multiplication signals by multiplying the two-phase voltage signals produced from said wave-form converting means by said deviation signal; and

two-phase to three-phase converting means arranged to convert the multiplication signals of two different phases into sine wave signals of three different phases and to supply the three-phase sine wave signals to a driving circuit for the motor under control.

2.    A control system for a permanent magnet synchronous motor, comprising:

a resolver arranged to detect the angle of rotation of the controlled motor by converting the rotation angle into a phase signal;

phase detecting means arranged to form phase detection signals of two different phases by detecting, according to said phase signal, carriers of two different phases which are supplied to said resolver;

wave-form converting means for converting said phase detection signals of two phases into voltage signals of two different phases;

a triangular wave-to-sine wave converter receiving said two-phase voltage signals;

deviation signal generating means for forming a deviation signal representing a difference between the phase signal of said resolver and a control command phase signal which has been applied to the deviation signal generating means beforehand;

multiplying means for the formation of multiplication signals by multiplying output signals of two different phases produced from said triangular wave-to-sine wave converter by said deviation signal; and

two-phase to three-phase converting means arranged to convert the multiplication signals of two different phases into sine wave signals of three different phases and to supply the three-phase sine wave signals to a driving circuit for driving said motor under control.

3.  A control system according to claim 1, wherein said carriers of two different phases which are produced from a carrier wave oscillator are sine waves having a 90 degree phase difference from each other.

4.  A control system according to claim 2, wherein said carriers of two different phases which are produced from a carrier wave oscillator are square waves having a 90 degree phase difference from each other.

5.  A control system according to claim 1 or 2, wherein said resolver is an electromagnetic resolver.

6.  A control system according to claim 1 or 2, wherein said resolver is a photo-electric resolver.

7.  A control system according to claim 1 or 2, wherein said deviation signal generating means includes a phase difference signal generator and a low-pass filter.

8.  A control system according to claim 1 or 2, wherein said deviation signal generating means includes a multiplier and a low-pass filter.

9.  A control system according to claim 1 or 2, wherein said deviation signal generating means includes a sample-and-hold circuit.

10   A control system according to claim 1 or 2, wherein said two-phase to three-phase converter includes a first attenuator which multiplies one input of the converter by 1/2; a first inverter which inverts the polarity of the output thereof; a second attenuator which multiplies the other input by $\sqrt{3}/2$; a second inverter which inverts the polarity of the output thereof; a first adder which adds the output of said first inverter and the output of said second attenuator together; and a second adder which adds the outputs of said first and second inverters together.

# FIG.1

# FIG.2

# FIG.5

# FIG.3

Vc  $V_1 \sin \omega t$

Vb  $K_1 V_1 \cos \theta \sin \omega t$

Va  $K_1 V_1 \sin \theta \sin \omega t$

# FIG.4

Va′  $V_2 \sin \omega t$

Vb′  $V_2 \cos \omega t$

Vc′  $K_3 V_2 \sin (\omega t + \theta)$

# FIG.6

# FIG.7

# FIG.8

# FIG.9

MOTOR DRIVING CKT 100

0133580

# F I G.10

Va"

Vb"

Vc"

Vd'

Ve'

Vf'

Vg'

Vf

Vg

European Patent Office

0133580

Application number

**EUROPEAN SEARCH REPORT**

EP  84 10 9503

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-2 451 657 (R.D. BAI et al.) * page 5, line 31 - page 11, line 7; page 13, lines 1-27; figures 1-3 * | 1,5,7, 8 | H 02 P 7/62 G 05 D 13/62 |
| A | EP-A-0 085 541 (FANUC) * page 8, line 11 - page 10, line 19; figures 1-3 * | 1,3-5 | |
| A | GB-A-1 046 983 (SEQUENTIAL ELECTRONIC SYSTEMS) * page 2, line 62 - page 3, line 68; figure 1 * | 1,3,4, 6 | |
| A | US-A-4 259 628 (K.K. YASHAWA DENKI SEISAKUSHO) * column 3, line 36 - column 4, line 27; column 6, lines 48-53; figures 1,2 * | 1-4 | TECHNICAL FIELDS SEARCHED (Int. Cl.4) |
| A | US-A-3 579 268 (AMPEX) * column 1, line 13 - column 3, line 35; figures 1,2 * | 1,9 | G 05 D 13/00 H 02 P 7/00 H 02 P 5/00 |

The present search report has been drawn up for all claims

| Place of search | Date of completion of the search | Examiner |
|---|---|---|
| THE HAGUE | 06-11-1984 | WEIHS J.A. |